# EUROPÄISCHE PATENTSCHRIFT

(11) **EP 3 563 969 B1**
(45) Veröffentlichungstag und Bekanntmachung des Hinweises auf die Patenterteilung: **21.06.2023**
(21) Anmeldenummer: 19172231.3
(22) Anmeldetag: 02.05.2019
(51) Int. Cl.: B23P 19/06, B25B 21/00, B25B 21/02, B25B 27/00

(54) **BETÄTIGUNGSWERKZEUG FÜR EINE SCHRAUBE SOWIE VERWENDUNG DES BETÄTIGUNGSWERKZEUGS ZUR JUSTIERUNG VON WENIGSTENS EINEM AGGREGAT EINES FAHRZEUGS**
ACTUATING TOOL FOR A SCREW AND USE OF THE ACTUATING TOOL FOR ADJUSTING AT LEAST ONE VEHICLE UNIT
OUTIL D'ACTIONNEMENT POUR UNE VIS AINSI QU'UTILISATION DE L'OUTIL D'ACTIONNEMENT DESTINÉE À L'AJUSTEMENT D'AU MOINS UN GROUPE D'UN VÉHICULE

(30) Priorität: 04.05.2018 DE 102018110835
(43) Veröffentlichungstag der Anmeldung: 06.11.2019
(73) Patentinhaber: Dürr Assembly Products GmbH, 66346 Püttlingen (DE)
(72) Erfinder: Pfeil, Holger-Thorsten, 66292 Riegelsberg (DE); Kurt, Ismal, 66333 Völklingen (DE); Petzinger, Christian, 66265 Heusweiler (DE)
(74) Vertreter: Patentanwaltskanzlei Vièl & Wieske PartGmbB

(56) Entgegenhaltungen:
- EP-A1- 2 944 418
- DE-A1-102015 109 448
- DE-U1-202015 101 098
- JP-A- H10 180 572
- JP-A- 2016 209 960
- US-A1- 2005 005 412
- US-A1- 2009 107 296
- US-A1- 2010 326 244

## Beschreibung

Die vorliegende Erfindung betrifft ein Betätigungswerkzeug für eine Schraube nach dem Oberbegriff des Anspruchs 1 sowie die Verwendung des Betätigungswerkzeugs zur Justierung von wenigstens einem Aggregat eines Fahrzeugs nach dem Oberbegriff des Anspruchs 11.

Ausgangspunkt der vorliegenden Erfindung sind Einstellwerkzeuge zur Durchführung von Justierungsarbeiten an Aggregaten von Fahrzeugen. Diese Aggregate der Fahrzeuge können die Scheinwerfer sein oder auch Sensoren wir beispielsweise Kameras oder Radarsensoren. Diese Aggregate haben ein eigenes (intrinsisches) Koordinatensystem. Dieses intrinsische Koordinatensystem muss so justiert werden, dass dieses Koordinatensystem mit dem Fahrzeugkoordinatensystem übereinstimmt. Dieses Fahrzeugkoordinatensystem kann bezogen auf die Fahrzeugkarosserie definiert sein. Das Fahrzeugkoordinatensystem kann auch so definiert sein, dass eine der Achse dieses Fahrzeugkoordinatensystems parallel verläuft zur geometrischen Fahrachse des Fahrzeugs. Diese geometrische Fahrachse des Fahrzeugs ist die Winkelhalbierende der Spurwinkel der (nicht gelenkten) Hinterräder des Fahrzeugs.

Die Aggregate werden zunächst am Fahrzeug montiert. Nach der Montage werden die Aggregate noch mittels Justierschrauben ausgerichtet. Zur Betätigung dieser Justierschrauben werden besondere Werkzeuge verwendet. Diese bestehen üblicherweise aus einem Handgriff mit Bedienungsschaltern bzw. Bedienungstastern sowie einem elektromotorischen Antrieb. Aus diesem Handgriff heraus erstreckt sich - gekoppelt mit der Abtriebswelle des elektromotorischen Antriebs - ein Drehmomentübertrager. Es ist üblich, den Kopf der Justierschraube als SechskantAntrieb vorzusehen oder ähnliches (beispielsweise als sogenannten Torx^{®} - Antrieb). Der Drehmomentübertrager ist dann eine längliche Stange, an deren Ende, das mit der Justierschraube zu deren Antrieb gekoppelt werden soll, sich ein Sechskantförmiges Ende befindet oder ein Ende entsprechend einem Torx^{®} - Antrieb. Grundsätzlich können auch andere Formen von miteinander koppelbaren Antriebselementen vorgesehen werden (Kreuzschlitzantriebe, ..).

Dieser Handgriff mit dem daran angebrachten Drehmomentübertrager wird von einem Werker betätigt, indem dieses Werkzeug zuerst auf den Kopf der Justierschraube des zu justierenden Aggregats (beispielsweise des Scheinwerfers) aufgesetzt wird. Entsprechend einer Abweichung der Istorientierung des Koordinatensystems des Aggregats zu einer Sollorientierung des Aggregats relativ zum Koordinatensystem des Fahrzeugs wird von dem Werker das Werkzeug betätigt im Sinne einer Linksdrehung bzw. Rechtsdrehung der Justierschraube zur Justierung des Koordinatensystems des Aggregats bezogen auf das Koordinatensystem des Fahrzeugs.

Es wird hierzu auf die DE 10 2015 109 448 A1 verwiesen. Dort ist eine Lösung vorgeschlagen für die Fälle, bei denen bei einem zu starken Druck auf das Einstellwerkzeug eine elastische Verformung von Teilen der Karosserie des Fahrzeugs erfolgen kann, die bei einem Entfernen des Einstellwerkzeugs wieder zurückgeht. Es kann passieren, dass eine Messung des intrinsischen Koordinatensystems des Aggregats bei dessen Einstellung zu dem Ergebnis führt, dass die Justierung richtig ist, dass sich aber durch die Rückverformung der Karosserie die Justierung des Aggregats wieder ändert.

Entsprechend dieser Darstellung erfolgt die Justierung von wenigstens einem Aggregat (beispielsweise eines Scheinwerfers) eines Fahrzeugs, indem einem Aggregat wenigstens eine Justierschraube zugeordnet ist, durch deren Drehung das intrinsische Koordinatensystem des Aggregats bezogen auf das Koordinatensystem des Fahrzeugs veränderbar einstellbar ist.

Insoweit handelt es sich also um ein Betätigungswerkzeug für eine (Justier-) Schraube mit wenigstens einem Drehmomentübertrager für jeweils eine Schraube. Der Drehmomentübertrager erstreckt sich entlang einer Längsachse. Das Betätigungswerkzeug weist wenigstens ein motorisch betriebenes Antriebsmittel auf, das ausgestaltet ist zum Antrieb des wenigstens einen Drehmomentübertragers. Hierzu erfolgt eine Übertragung des Drehmomentes der Abtriebswelle des wenigstens einen Antriebsmittels auf den wenigstens einen Drehmomentübertrager. Über den Drehmomentübertrager erfolgt eine Betätigung der Justierschraube. Hierzu korrespondiert der Drehmomentübertrager an seinem einen Ende formschlüssig mit dem Kopf der Justierschraube.

Aus der JP 2016 209 960 A ist weiterhin ein Betätigungswerkzeug für eine Schraube bekannt, bei der das Antriebsmittel seitlich neben dem Drehmomentübertrager angeordnet ist derart, dass die Längsachse des Drehmomentübertragers seitlich versetzt ist zur Abtriebswelle des Antriebsmittels. Das Betätigungswerkzeug weist weiterhin eine Drehmomentübertragungseinheit auf, die ausgestaltet ist zur Übertragung des Drehmoments von der Abtriebswelle des Antriebsmittels auf den Drehmomentübertrager. Das Betätigungswerkzeug ist so ausgestaltet, dass bei einem fertig montierten Betätigungswerkzeug, das zumindest das Antriebsmittel sowie einen Drehmomentübertrager umfasst, der Drehmomentübertrager derart gegenüber dem wenigstens einen Antriebsmittel gelagert ist, dass der Drehmomentübertrager entlang seiner Längsachse gegenüber dem wenigstens einen Antriebsmittel verschiebbar ist. Die JP 2016 209 960 A offenbart die Merkmale des Oberbegriffs des Anspruchs 1.

Diese Verschiebbarkeit des Drehmomentübertragers in seiner Längsrichtung ist bei der JP 2016 209 660 A gegeben, um durch das Verschieben des Drehmomentübertragers in seiner Längsrichtung, ein Werkzeug (ein Bit) anzukoppeln bzw. abzukoppeln. Dabei werden koordiniert mit dieser Längsverschiebung noch weitere Betätigungselemente aktiviert und deaktiviert, mit denen das jeweilige Bit nach dem Ankoppeln sicher gehalten wird und vor dem Abkoppeln wieder gelöst wird.

Nach dem Ankoppeln eines Bits kann mit dem Drehmomentübertrager eine Schraube betätigt werden.

Bei der JP 2016 209 660 A befindet sich das anzukoppelnde Bit relativ zu dem Drehmomentübertrager in horizontaler sowie auch in vertikaler Richtung in einer Sollposition. Der Drehmomentübertrager kann also mit einer geführten Bewegung gezielt so bewegt werden, dass das Bit sicher angekoppelt wird. Entsprechendes gilt umgekehrt auch beim Abkoppeln des Bits.

Diese Ausgestaltung bringt außerdem mit sich, dass die Baulänge des Betätigungswerkzeugs verkürzt wird. Das Werkzeug umfasst das wenigstens eine Antriebsmittel, die Drehmomentübertragungseinheit und den wenigstens einen Drehmomentübertrager. Weil das Antriebsmittel seitlich neben dem Drehmomentübertrager angeordnet ist, ergibt sich eine kürzere Baulänge gegenüber einer Ausgestaltung, bei der der sich der Drehmomentübertrager in axialer Richtung der Abtriebswelle der Antriebsmittel erstreckt und damit eine "Verlängerung" der Antriebsmittel darstellt.

In der Verwendung einer solchen Ausgestaltung beim Aufsetzen eines Betätigungswerkzeugs auf den Kopf einer Schraube ergibt sich als weiterer Vorteil, dass die Position der Antriebsmittel und der Drehmomentübertragungseinheit bezogen auf die Längsrichtung des Drehmomentübertrages flexibel ist. Dadurch besteht die Möglichkeit, das Werkzeug mit einem einfacheren Bewegungsablauf auf die Schraube aufsetzen zu können. Dies gilt insbesondere dann, wenn der zur Verfügung stehende Einbauraum oberhalb des Kopfes der Schraube eingeschränkt ist.

Der vorliegenden Erfindung liegt die Aufgabe zu Grunde, ein Betätigungswerkzeug so auszugestalten, dass damit die Handhabung des Betätigungswerkzeugs flexibler wird.

Bei der Ausgestaltung nach der vorliegenden Erfindung ist die verschiebbare Lagerung des wenigstens einen Drehmomentübertragers gegenüber dem wenigstens einen Antriebsmittel derart ausgestaltet, dass diese Lagerung eine Halteposition aufweist, aus der der wenigstens eine Drehmomentübertrager in seiner Längsrichtung nur dann verschiebbar ist, wenn auf den wenigstens einen Drehmomentübertrager eine Kraft in seiner Längsrichtung ausgeübt wird, die oberhalb eines ersten Schwellwertes der Kraft liegt, die beim formschlüssigen Ankoppeln des Drehmomentübertragers mit dem Kopf der Schraube auftritt.

Diese Ausgestaltung erweist sich beim Aufsetzen des Endes des Drehmomentübertragers auf den Kopf der Schraube als vorteilhaft. Hierbei sind im Normalfall die Orientierung des Drehmomentübertragers und die Orientierung des Kopfes der Schraube hinsichtlich einer Drehung um deren jeweilige Längsachsen nicht so aufeinander abgestimmt, dass der Drehmomentübertrager durch eine Verschiebung in seiner Längsrichtung auf den Kopf der Schraube aufsetzbar ist. Vorteilhafte Ausgestaltungen des Betätigungswerkzeugs sind in den abhängigen Ansprüchen angegeben.

Vorteilhaft kann mit der Ausgestaltung nach der vorliegenden Erfindung vermieden werden, dass der Drehmomentübertrager vom Kopf der Schraube weggedrückt wird, anstatt mit dem Kopf der Schraube gekoppelt zu werden. Hierzu wird der Drehmomentübertrager zunächst auf den Kopf der Schraube zu bewegt. Wenn der Drehmomentübertrager dann wegen Überschreiten des Schwellwertes der Kraft nach oben gedrückt wird, können weitere Maßnahmen vorgesehen werden, um den Drehmomentübertrager mit dem Kopf der Schraube zu koppeln.

Hierzu kann beispielsweise der Drehmomentübertrager langsam gedreht werden im Sinne einer Drehung um die Längsachse des Drehmomentübertragers durch ein Drehmoment, das von den Antriebsmitteln übertragen wird.

Alternativ oder zusätzlich kann die nachfolgend beschriebene Taumelbewegung eingeleitet werden.

Der Schwellwert der Kraft kann im Sinne der vorliegenden Erfindung also so definiert sein, dass der Drehmomentübertrager nur dann aus einer Halteposition gedrückt wird, wenn die Kraft einer Kraft entspricht, die oberhalb der Kraft liegt, die beim formschlüssigen Ankoppeln des Drehmomentübertragers mit dem Kopf der Schraube auftritt.

Eine derartige Lagerung kann beispielsweise realisiert werden, indem der Drehmomentübertrager gegenüber einer Verschiebung in Richtung seiner Längsachse relativ zu den Antriebsmitteln und der Drehmomentübertragungseinheit mit einer federelastisch gelagerten Kugel gesichert wird, die als Halbkugel formschlüssig in den Drehmomentübertrager eingreift.

Es ist auch möglich, Stellelemente vorzusehen, die entsprechend definierte Haltekräfte ausüben und die Verschiebung des Drehmomentübertragers gegenüber den Antriebsmitteln und der Drehmomentübertragungseinheit beim Überschreiten von Schwellwerten der Kräfte freigeben.

Vorteilhaft lässt sich mit der Ausgestaltung nach Anspruch 2 bei der Verwendung des Betätigungswerkzeugs für die Betätigung einer Justierschraube auch realisieren, dass nach einem Justiervorgang des Aggregats, bei dem die Justierschraube(n) gedreht wurde(n), die Auszugskräfte begrenzt werden, mit denen der Drehmomentübertrager von der Justierschraube abgezogen wird. Es kann passieren, dass sich der Drehmomentübertrager und der Kopf der Justierschraube bei einer Drehung der Justierschraube durch den Drehmomentübertrager miteinander verkanten. Wenn dann der Drehmomentübertrager mit einer "beliebig großen Kraft" im automatisierten Betrieb abgezogen wird, kann es passieren, dass sich entweder die Justierschraube wieder verstellt oder dass es zu mechanischen Beschädigungen kommt.

Bei der Ausgestaltung nach Anspruch 2 wird der Schwellwert der Kraft (zur Unterscheidung von dem in Anspruch 1 definierten "ersten Schwellwert" hier als "zweiter Schwellwert" bezeichnet) also so definiert, dass der Drehmomentübertrager dann aus der Halteposition gedrückt wird, wenn die Kraft einer Kraft entspricht, die oberhalb der Kraft liegt, die beim Abziehen des Drehmomentübertragers vom Kopf der Schraube üblicherweise maximal auftritt, wenn der Drehmomentübertrager und der Kopf der Schraube nicht verkantet sind.

Beim Abziehen des Werkzeugs wird dann oberhalb des Schwellwertes der Kraft nicht mehr der Drehmomentübertrager von der Justierschraube abgezogen, sondern die Position der Antriebsmittel sowie der Drehmomentübertragungseinheit wird in Längsrichtung des Drehmomentübertragers verändert.

Bei der Ausgestaltung nach Anspruch 3 ist die Lagerung federelastisch ausgestaltet derart, dass der wenigstens eine Drehmomentübertrager in seiner Längsrichtung gedrückt wird derart, dass diese Federkraft einen Druck in Richtung des Endes des wenigstens einen Drehmomentübertragers ausübt, über das die Schraube angetrieben wird.

Durch diese Ausgestaltung wird der Drehmomentübertrager vorteilhaft in Richtung des Kopfes der Schraube gedrückt, die mit dem Drehmomentübertrager betätigt werden soll. Die Federkraft kann beispielsweise zwischen 4 N und 10 N liegen. Diese Federkraft reicht aus, um den Drehmomentübertrager gegenüber den Reibungskräften seiner verschiebbaren Lagerung relativ zu den Antriebsmitteln und der Drehmomentübertragungseinheit in Richtung des Kopfes der Schraube zu drücken. Die Justierschrauben von Aggregaten eines Fahrzeugs werden üblicherweise von oben betätigt, so dass der Drehmomentübertrager bei dieser Verwendung nach unten gedrückt wird. Dies gilt zumindest dann, wenn die Lagerung formschlüssig mit dem üblichen Spiel erfolgt und nicht so konstruiert wird, dass besondere Reibungskräfte auftreten können.

Andererseits sind diese Federkräfte ausreichend gering, so dass der Drehmomentübertrager entgegen dieser Federkraft geschoben wird, wenn er auf ein Hindernis auftrifft. Dies erfolgt insbesondere mit so geringen Kräften, dass Beschädigungen vermieden werden können.

Eine besonders vorteilhafte Ausgestaltung ergibt sich durch die Kombination der Maßnahmen nach Anspruch 1 und Anspruch 3. Dabei ist es möglich, während der Positionierung des Werkzeugs die Klemmkräfte im Sinne des Anspruchs 1 zu deaktivieren. Der Drehmomentübertrager ist dann in seiner Längsrichtung (insbesondere bei einem Auftreffen auf ein Hindernis im Verlaufe der Bewegung bei der Positionierung) gegenüber den Antriebsmitteln und der Drehmomentübertragungseinheit entgegen den Federkräften im Sinne des Anspruchs 3 verschiebbar. Wenn der Drehmomentübertrager unmittelbar vor der Kopplung mit der Justierschraube des Scheinwerfers steht, können die Kräfte im Sinne des Anspruchs 1 aktiviert werden, die dazu führen, dass der Drehmomentübertrager dann in seiner Längsrichtung gegenüber den Antriebsmitteln sowie der Drehmomentübertragungseinheit erst dann verschoben wird, wenn die auf den Drehmomentübertrager einwirkenden Kräfte größer sind als der erste Schwellwert. Dieser erste Schwellwert wird dabei so ausgelegt, dass der Drehmomentübertrager mit dem Kopf der Justierschraube koppelbar ist.

Die Kräfte im Sinne des Anspruchs 2 können nach der erfolgten Justierung auch so ausgelegt werden, dass ein "Abziehen" des Drehmomentübertragers von dem Kopf der Justierschraube nach dem Justiervorgang nur insoweit möglich ist, als dies zerstörungsfrei und ohne Dejustierung des Aggregates (Scheinwerfers) erfolgt. Es handelt sich hierbei dann um den zweiten Schwellwert.

Ggf. können die Kräfte, mit denen der Drehmomentübertrager beim Aufsetzen auf den Kopf der Justierschraube gehalten wird, unterschiedlich sein zu den Kräften, mit denen der Drehmomentübertrager beim Abziehen von dem Kopf der Justierschraube gehalten wird. Diese Kräfte definieren jeweils den Schwellwert, bei dessen Überschreitung der Drehmomentübertrager in seiner Längsrichtung gegenüber den Antriebsmitteln und der Drehmomentübertragungseinheit verschoben wird. Diese Erläuterung bedeutet, dass der erste Schwellwert und der zweite Schwellwert unterschiedlich sein können.

Dies lässt sich durch folgenden Verfahrensablauf darstellen:
➢ Zunächst erfolgt die Positionierung des Betätigungswerkzeugs mit der federelastischen Lagerung des Drehmomentübertragers bei deaktivierten Klemmkräften im Sinne des Anspruchs 1.
➢ Nach erfolgter Positionierung des Drehmomentübertragers erfolgt die Kopplung mit dem Kopf der Justierschraube in einer Halteposition des Drehmomentübertragers mit einer Klemmkraft für den Drehmomentübertrager gegenüber einer Verschiebung in seiner Längsrichtung, die so begrenzt ist (erster Schwellwert), dass der Drehmomentübertrager dann aus der Halteposition gedrückt wird, wenn die Kraft einer Kraft entspricht, die oberhalb der Kraft liegt, die beim formschlüssigen Ankoppeln des Drehmomentübertragers mit dem Kopf der Schraube üblicherweise auftritt.
➢ Es werden die Justierungsarbeiten durchgeführt.
➢ Nach erfolgter Justierung erfolgt die Abkopplung des Drehmomentübertragers vom Kopf der Justierschraube mit einer Klemmkraft für den Drehmomentübertrager in dieser Halteposition gegenüber einer Verschiebung in seiner Längsrichtung, die so begrenzt ist (zweiter Schwellwert), dass der Drehmomentübertrager dann aus der Halteposition gedrückt wird, wenn die Kraft einer Kraft entspricht, die oberhalb der Kraft liegt, die beim Abziehen des Drehmomentübertragers vom Kopf der Schraube üblicherweise maximal auftritt, wenn der Drehmomentübertrager und der Kopf der Schraube nicht verkantet sind.

Die Beschreibung dieses Verfahrens entspricht dem Verwendungsanspruch 11.

Bei der Ausgestaltung nach Anspruch 4 ist die Lagerung derart ausgestaltet, dass diese Lagerung eine obere Rastposition für den wenigstens einen Drehmomentübertrager aufweist, in der der wenigstens eine Drehmomentübertrager entgegen der Federkraft bis zu einer oberen Endposition gedrückt ist, wobei das Betätigungswerkzeug Rastmittel aufweist, die derart ausgestaltet sind, dass durch deren Aktivierung der wenigstens eine Drehmomentübertrager in dieser oberen Rastposition form- und / oder kraftschlüssig gehalten wird.

Dies erweist sich insbesondere dann als vorteilhaft, wenn ein Werkzeug zur Justierung eines Aggregats für bestimmte Fahrzeugtypen zwei dieser Drehmomentübertrager aufweist zur Betätigung von zwei Justierschrauben eines Aggregats. Soll ein solches Werkzeug für ein Fahrzeug verwendet werden, dessen Aggregat nur eine Justierschraube hat, wird es mit der Ausgestaltung nach Anspruch 4 möglich, mit einem der Drehmomentübertrager auf einen Anschlag zuzufahren und diesen Drehmomentübertrager dadurch in seine oberste Position zu bringen und dann in dieser obersten Position form- und / oder kraftschlüssig zu fixieren.

Es wird dann möglich, mit dem anderen Drehmomentübertrager die Justierschraube des Aggregats des Fahrzeugs zu betätigen, ohne dass der andere Drehmomentübertrager in mechanischen Kontakt mit Fahrzeugteilen kommt und diese eventuell beschädigt.

Bei der Ausgestaltung nach Anspruch 5 weist die wenigstens eine Drehmomentübertragungseinheit eine Lagerung für den wenigstens einen Drehmomentübertrager auf, die derart ausgestaltet ist, dass die Lagerung den wenigstens einen Drehmomentübertrager form- und/oder kraftschlüssig umgreift zur Übertragung eines Drehmomentes von der Lagerung auf den wenigstens einen Drehmomentübertrager und wobei die Lagerung über die Abtriebswelle des wenigstens einen Antriebsmittels antreibbar ist.

Wenn beispielsweise der Kopf der Justierschraube einen Innensechskantantrieb aufweist, kann der Drehmomentübertrager über seine volle Länge auf seiner Außenfläche als Sechskant ausgestaltet sein. Es ist dann in einfacher Weise möglich, den Drehmomentübertrager formschlüssig zu umgreifen mit einer Hülse, die in Längsrichtung eine Innenöffnung aufweist, die mit dem Sechskant auf der Außenfläche des Drehmomentübertragers korrespondiert. Die Hülse ist bei dieser Ausgestaltung über die Abtriebswelle der Antriebsmittel mittelbar oder unmittelbar antreibbar.

Anstelle des Formschlusses dieser Lagerung kann diese auch mit Haltemitteln ausgestaltet sein, die den Drehmomentübertrager greifen und die ansteuerbar aktivierbar und deaktivierbar sind. Besonders vorteilhaft können dabei die Stellmittel zur Erzeugung der Haltekräfte so ansteuerbar sein, dass die Funktionen im Sinne der Ansprüche 2 und / oder 3 realisierbar sind.

Bei der Ausgestaltung nach Anspruch 6 ist weist der wenigstens eine Drehmomentübertrager jeweils ein Lagerelement auf, in dem der wenigstens eine Drehmomentübertrager derart gelagert ist, dass dieser bei feststehendem Lagerelement um seine Längsachse rotierbar ist, wobei der wenigstens eine Drehmomentübertrager auf seiner Außenumfangsfläche eine zahnradförmige Profilierung aufweist, über die der wenigstens eine Drehmomentübertrager mittels der Abtriebswelle des wenigstens einen Antriebsmittels mittelbar oder unmittelbar antreibbar ist.

Bei dieser Ausgestaltung ist die Außenfläche des Drehmomentübertragers so ausgestaltet, dass diese als Zahnrad, das in Richtung seiner Achse verschiebbar ist, direkt von einem korrespondierenden Zahnrad der Drehmomentübertragungseinheit angetrieben wird.

Bei der Ausgestaltung nach Anspruch 7 weist das Betätigungswerkzeug eine Antriebseinheit auf, die derart gestaltet ist, dass über diese Antriebseinheit der wenigstens eine Drehmomentübertrager in einer Taumelbewegung derart bewegbar ist, dass die Längsachse des wenigstens einen Drehmomentübertragers in der Form einer Kegelfläche rotiert, wobei die Spitze des Kegels durch das Ende des wenigstens einen Drehmomentübertragers gebildet wird, über das die Schraube angetrieben wird.

Es handelt sich bei dem Ende des Drehmomentübertragers somit um das Ende, das an den Kopf der Schraube angekoppelt wird zur Betätigung der Schraube.

Durch diese Bewegungsmöglichkeit wird insbesondere das "Einfädeln" des Drehmomentübertragers in den Kopf der Justierschraube erleichtert. Wenn der Drehmomentübertrager unmittelbar an dem Kopf der Justierschraube anliegt, aber hinsichtlich einer Rotation um seine Längsachse nicht einfädeln kann, kann durch den beschriebenen Bewegungsablauf das Einfädeln erleichtert werden.

Es kann auch sinnvoll sein, eine derartige Bewegung beim Abziehen des Drehmomentübertragers auszuführen. Dies erweist sich besonders dann als vorteilhaft, wenn der Drehmomentübertrager mit dem Kopf der Justierschraube bei der Drehung der Justierschraube verkantet ist. Dies gilt insbesondere dann, wenn das Ende des Drehmomentübertragers, das mit dem Kopf der Justierschraube korrespondiert, "tropfenförmig" ausgebildet ist, wie dies bei Werkzeugen mit einem Sechskantantrieb bekannt ist, um diese Werkzeuge leichter auf den Kopf einer Schraube aufsetzen zu können.

Bei der Ausgestaltung nach Anspruch 8 weist das Betätigungswerkzeug eine Tragplatte auft, wobei zwei Drehmomentübertrager auf derselben Tragplatte derart angebracht sind, dass die Position und / oder die Orientierung der beiden Drehmomentübertrager relativ zueinander einstellbar ist.

Dies erweist sich insofern als vorteilhaft, weil damit das Werkzeug, das die beiden Drehmomentübertrager aufweist, in einfacher Weise auf unterschiedliche Aggregate unterschiedlicher Fahrzeugtypen einstellbar ist.

Bei der Ausgestaltung nach Anspruch 9 weisen der Drehmomentübertrager oder die Tragplatte Befestigungsmittel auf zur Befestigung am Ende eines Roboterarms.

Vorteilhaft ist dadurch der Drehmomentübertrager oder die Tragplatte mittels des Roboterarms positionierbar.

Dies erweist sich insofern als vorteilhaft, weil die Positionierung mittels des an sich bekannten Roboters erfolgen kann. Durch die Vorteile der Verstellbarkeit der Position des Drehmomentübertragers gegenüber den Antriebsmitteln und der Drehmomentübertragungseinheit, die direkt am vorderen Ende des Roboterarms angebracht sind, ergibt sich der Vorteil, dass der Drehmomentübertrager verschiebbar ist gegenüber den Antriebsmitteln und der Drehmomentübertragungseinheit und damit auch gegenüber dem Ende des Roboterarms. Durch diese Verschiebbarkeit können die Größenverhältnisse des Betätigungswerkzeugs für die Positionierung gut angepasst werden.

Bei der Ausgestaltung nach Anspruch 10 ist der Roboterarm nach den Kriterien der "Mensch-Roboter-Kollaboration" oder der "Mensch-Roboter-Kooperation" (MRK) ausgelegt.

Dies bedeutet, dass der Roboterarm entsprechend der ISO/TS 15066 ausgelegt ist oder sich in seiner Auslegung zumindest an dieser ISO/TS 15066 orientiert. Es geht dabei darum, dass der Roboter(arm) nicht darauf beschränkt ist, in einem gesondert abgesperrten Bereich in Betrieb genommen zu werden. Vielmehr soll dieser Roboter(arm) auch in räumlicher Nähe zu einem Menschen betrieben werden können, ohne diesen zu gefährden. Dies bedeutet, dass zum einen die Bewegungsgeschwindigkeit des Roboters derart reduziert ist, dass der Mensch dem Roboter ausweichen kann. Außerdem werden die Kräfte zur Bewegung des Roboter(arm)s derart begrenzt, dass auch bei einer "Kollision" mit einem Menschen keine gesundheitlichen Beeinträchtigungen auftreten. Ggf. kann der Roboter noch mit einer Kamera ausgestattet werden, um seine Umgebung zu beobachten, so dass er bei seinem weiteren Bewegungsablauf ggf. erkannte Hindernisse berücksichtigen kann.

Gerade in diesem Zusammenhang ist die Verwendung des Betätigungswerkzeugs im Sinne des Anspruchs 11 besonders vorteilhaft. Durch die Konstruktion des Betätigungswerkzeugs wird der notwendige Raum zur Bewegung des Betätigungswerkzeugs bei dessen Positionierung verkleinert. Es sind durch die kompaktere Bauweise weniger Verkantungen notwendig, um den Drehmomentübertrager auf die Justierschraube aufzusetzen. Außerdem ist der Bewegungsablauf des Roboter(arm)s für den Werker leichter vorhersehbar, wenn dieser Bewegungsablauf weniger komplex ist. Eventuelle Kollisionen des Werkers mit dem Roboter(arm) können deswegen vermindert werden.

Bei der Verwendung nach Anspruch 11 (Verwendung des Betätigungswerkzeugs zur Justierung von wenigstens einem Aggregat eines Fahrzeugs) ist dem wenigstens einen Aggregat des Fahrzeugs wenigstens eine Justierschraube zugeordnet, durch deren Drehung das intrinsische Koordinatensystem des Aggregats bezogen auf das Koordinatensystem des Fahrzeugs veränderbar einstellbar ist

Das wenigstens eine Aggregat des Fahrzeugs kann beispielsweise ein Scheinwerfer sein, der in seiner Abstrahlrichtung (intrinsisches Koordinatensystem des Scheinwerfers) auf das Koordinatensystem des Fahrzeugs justiert werden kann.

Bekannte Scheinwerfer verfügen hierzu über eine oder über zwei Einstellschrauben. Diese dienen zur Verstellung der Abstrahlrichtung des Scheinwerfers in horizontaler und in vertikaler Richtung gemäß den gesetzlichen Anforderungen.

Das wenigstens eine Aggregat kann auch ein FAS-Sensor (ACC-Sensor) sein, dessen intrinsisches Koordinatensystem ebenfalls mittels einer oder mittels zweier Justierschrauben relativ zum Koordinatensystem des Fahrzeugs ausgerichtet werden kann. Diese Sensoren können beispielsweise Kameras oder sonstige Sensoren sein, die der Erfassung der Umgebung des Fahrzeugs (insbesondere auch von Objekten in der Umgebung des Fahrzeugs) dienen.

Der Drehmomentübertrager muss - abhängig von dem Fahrzeugtyp - eine bestimmte Länge aufweisen. Dies liegt daran, dass die Justierschraube bei einem in ein Fahrzeug eingebauten Aggregat (beispielsweise einem Scheinwerfer) so tief unten liegen kann, dass bei einem beengten Einbauzustand im Motorraum gerade einmal der Drehmomentübertrager nach unten geführt und auf die Justierschraube aufgesetzt werden kann. Diese Länge des Drehmomentübertragers muss dabei ausreichend sein, dass - ggf. auch bei unterschiedlichen Fahrzeugtypen und unterschiedlichen Einbausituationen des jeweiligen Aggregats - in jedem dieser Fälle der Drehmomentübertrager auf die Justierschraube aufgesetzt werden kann.

Da die Position der Antriebsmittel und der Drehmomentübertragungseinheit entlang dem Drehmomentübertrager veränderbar ist, können beispielsweise beim Einsetzen des Werkzeugs die Antriebsmittel und die Drehmomentübertragungseinheit entlang dem Drehmomentübertrager "nach unten" verschoben sein. Dadurch kann beispielsweise erleichtert werden, dass das Werkzeug oberhalb des Motorraums und unterhalb der geöffneten Motorhaube positioniert werden kann. Dabei muss das Werkzeug u.U. verkantet werden. Beim anschließenden Aufrichten des Werkzeugs ist es im Hinblick auf den zur Verfügung stehenden Raum vorteilhaft, wenn sich die vergleichsweise voluminöse Baugruppe, die aus den Antriebsmitteln und der Drehmomentübertragungseinheit besteht, nicht in der obersten Position befindet.

Mit der Ausgestaltung nach Anspruch 11 ist es bei der Justierung von Aggregaten eines Fahrzeugs möglich, dass das Werkzeug in der im Zusammenhang mit Anspruch 1 beschriebenen Weise positioniert und dann im Hinblick auf die Orientierung der Längsachse des Drehmomentübertragers gedreht wird. Anschließend kann der Drehmomentübertrager gegenüber den an ihren Positionen verbleibenden Antriebsmitteln und der Drehmomentübertragungseinheit abgesenkt werden bis dieser Drehmomentübertrager mit dem Kopf der Justierschraube gekoppelt ist.

Hierzu kann der Drehmomentübertrager mit Stellmitteln im Hinblick auf eine Verschiebung gegenüber den Antriebsmitteln und der Drehmomentübertragungseinheit bewegt werden. Es ist ebenso möglich, dass der Drehmomentübertrager federelastisch gelagert ist und durch die Federkraft gegenüber den Antriebsmitteln und der Drehmomentübertragungseinheit in Richtung seiner Längsachse nach unten gedrückt wird. Hierbei wird der Drehmomentübertrager entgegen der Federkraft nach oben gedrückt, wenn dieser mit dem Ende, das zur Bewegung der Justierschraube mit dem Kopf der Justierschraube gekoppelt werden soll, auf ein Hindernis auftrifft.

Bei der Ausführungsform nach dem Stand der Technik für das Anwendungsgebiet der Betätigungswerkzeuge für Justierschrauben von Aggregaten eines Fahrzeugs war der Drehmomentübertrager zwar unmittelbar an das Antriebsmittel ankoppelbar. Da der Drehmomentübertrager dabei jedoch als Verlängerung der Antriebsmittel ausgeführt wurde, ergab sich für das Werkzeug insgesamt eine größere Baulänge. Dieses Werkzeug war geeignet, weil ein Werker eine Positionierung und Orientierung dieses Werkzeugs auch in einem komplexeren Bewegungsablauf "auf Sicht" einfach und schnell ausführen kann.

Für eine Ausrichtung und auch Handhabung des Betätigungswerkzeugs im Rahmen eines automatisierten Prozesses erweist es sich als vorteilhaft, wenn die Position der Antriebsmittel und der Drehmomentübertragungseinheit veränderbar ist bezogen auf die Längsrichtung des Drehmomentübertragers. Der Bewegungsablauf zur Positionierung und Kopplung des Drehmomentübertragers mit der Justierschraube wird vereinfacht mit einer Reduzierung der Baulänge. Dieser Vorteil ergibt sich insbesondere für die Ausgestaltung nach Anspruch 10.

In einer vorteilhaften Gestaltung eines Gesamtsystems kann der Roboterarm an einem Portalsystem angebracht sein, das Bestandteil eines Prüfstands ist zur Durchführung der Einstellarbeiten des wenigstens einen Aggregats des Fahrzeugs.

Dies erweist sich insofern als vorteilhaft, weil damit die Position des Roboterarms und damit auch des Endes des Roboterarms, an dem der wenigstens eine Drehmomentübertrager angebracht ist, bekannt ist, bezogen auf das Koordinatensystem des Fahrzeugs. Damit kann der Drehmomentübertrager im automatisierten Betrieb einfach positioniert werden.

Ein Ausführungsbeispiel der Erfindung ist in der Zeichnung dargestellt. Die Erfindung wird anhand von Scheinwerfern des Fahrzeugs erläutert, die in dem Ausführungsbeispiel die Aggregate des Fahrzeugs darstellen. Es zeigt dabei:
- Fig. 1:: zwei Drehmomentübertrager mit jeweils zugeordneten motorisch betriebenen Antriebsmitteln sowie Drehmomentübertragungseinheiten auf einer gemeinsamen Tragplatte,
- Fig. 2:: die Anordnung nach Figur 1, wobei die Tragplatte am Arm eines Roboters montiert ist.
- Fig. 3:: ein Portalsystem mit zwei Roboterarmen, an denen jeweils eine Tragplatte nach Figur 1 angebracht ist und denen jeweils eine Messeinheit zur Messung der Abstrahlrichtung des Lichtes bezogen die Messeinheit zugeordnet ist und
- Fig. 4:: eine Darstellung des Portalsystems nach Figur 3 in einer Draufsicht von oben.

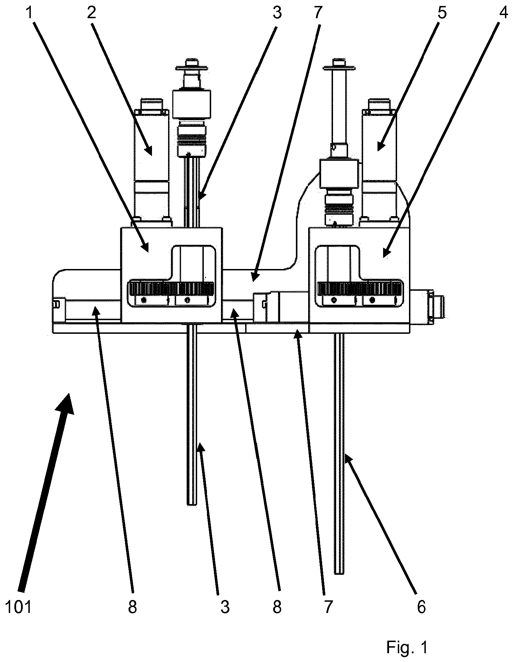

Figur 1 zeigt zwei Drehmomentübertrager 3, 6 mit jeweils zugeordneten motorisch betriebenen Antriebsmitteln 2, 5 sowie Drehmomentübertragungseinheiten 1, 4 auf einer gemeinsamen Tragplatte 7.

Die Drehmomentübertrager 3, 6 werden jeweils von einer Hülse umgriffen, die jeweils Bestandteil der Drehmomentübertragungseinheiten 1 und 4 ist.

Die Drehmomentübertrager 3 und 6 sind als Sechskantstäbe ausgebildet, die Hülsen, die diese Sechskantstäbe 3 und 6 umgreifen, weisen eine innere Öffnung auf, die ebenfalls ein Sechskantprofil aufweist.

Die Antriebsmittel 2, 5 sind seitlich neben den Drehmomentübertragern 3, 6 angeordnet derart, dass die Längsachsen der Drehmomentübertrager 3, 6 seitlich versetzt sind zur Abtriebswelle des jeweiligen Antriebsmittels 2, 5. Die Drehmomentübertragungseinheiten 1, 4 sind ausgestaltet zur Übertragung des Drehmoments von der Abtriebswelle des Antriebsmittels 2, 5 auf den jeweiligen Drehmomentübertrager 3, 6. Das Betätigungswerkzeug ist so ausgestaltet ist, dass bei einem fertig montierten Betätigungswerkzeug, das zumindest die Antriebsmittel 2, 5 sowie die Drehmomentübertrager 3, 6 umfasst, die Drehmomentübertrager 3, 6 derart gegenüber den Antriebsmitteln 2, 5 gelagert sind, dass die Drehmomentübertrager 3, 6 entlang ihrer Längsachse gegenüber dem jeweiligen Antriebsmittel 2, 5 verschiebbar sind.

Es ist zu sehen, dass die Drehmomentübertrager 3 und 6 (gemeinsam mit den zugeordneten Antriebsmitteln 2 und 5 sowie den zugeordneten Drehmomentübertragungseinheiten 1 und 4) in ihrem seitlichen Abstand veränderbar positioniert werden können, indem diese entlang der Schiene 8 verschiebbar sind.

Die Tragplatte 7 mit den darauf angebrachten Drehmomentübertragern 3 und 6 sowie den diesen zugeordneten Antriebsmitteln 2 und 5 sowie den Drehmomentübertragungseinheiten 1 und 4 haben als Baugruppe das Bezugszeichen 101.

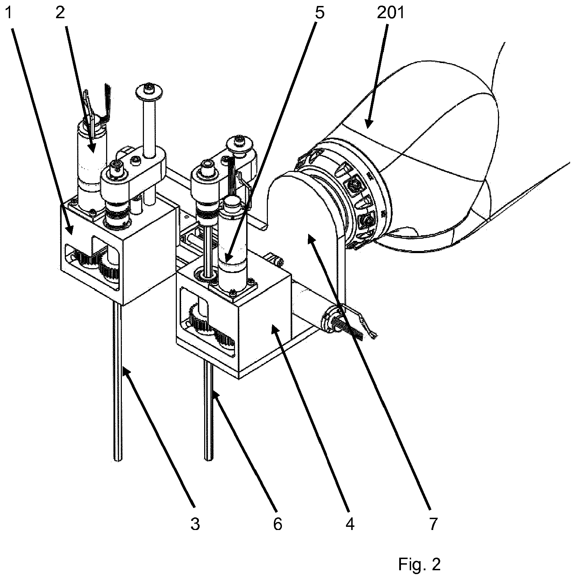

Figur 2 zeigt die Anordnung nach Figur 1, wobei die Tragplatte 7 am Arm eines Roboters 201 montiert ist.

Im Übrigen tragen die gleichen Bauteile wie bei Figur 1 auch die gleichen Bezugszeichen.

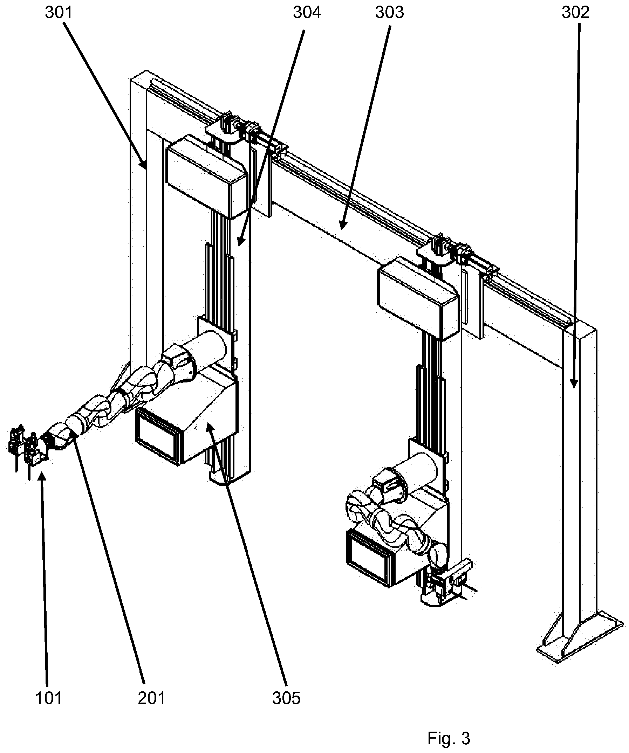

Figur 3 zeigt ein Portalsystem, bestehend aus den beiden vertikalen Trägern 301 und 302 sowie dem horizontalen Arm 303.

Von diesem oberen horizontalen Arm 303 verlaufen zwei senkrechte Tragelemente nach unten. Von diesen Tragelementen ist nur eines mit einer Bezugsziffer (304) versehen.

Es ist zu sehen, dass diese Tragelemente 304 zum einen längenveränderlich sind. Außerdem sind diese Tragelemente entlang des horizontalen Arms 303 des Portalsystems bewegbar.

An jedem dieser Tragelemente 304 ist ein Roboterarm angebracht, bei dem wieder bei dem einen Roboterarm dessen Ende 201 mit einer Bezugsziffer versehen ist. Außerdem ist zu sehen, dass am Ende des Roboterarms jeweils eine Einheit 101 entsprechend der Figur 1 angebracht ist. Vorteilhaft sind diese Roboterarme als MRK-Roboterarme ausgelegt.

Außerdem weist jedes dieser Tragelemente 304 noch eine Messeinheit 305 zur Messung der Abstrahlrichtung des Lichtes des Scheinwerfers des Fahrzeugs.

Aus der Stellung der beiden Roboterarme ist zu sehen, dass mit diesen Roboterarmen die Drehmomentübertrage 3 und 6 zu den Scheinwerfern des Fahrzeugs ausgerichtet werden können.

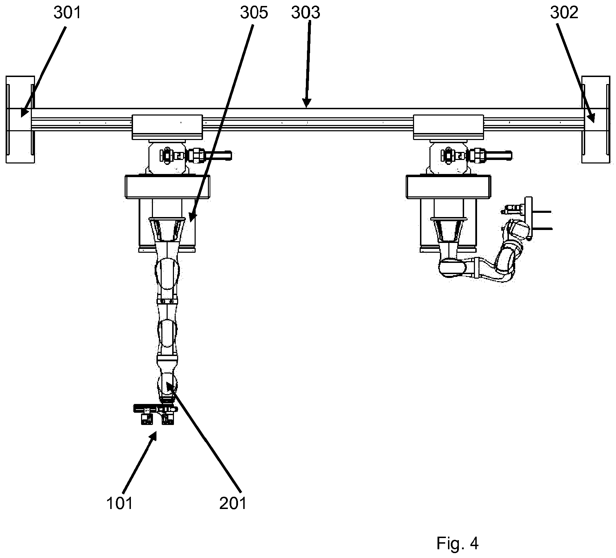

Figur 4 zeigt eine Darstellung des Portalsystems nach Figur 3 in einer Draufsicht von oben.

Im Rahmen der vorliegenden Erfindung ist es damit möglich, ein Fahrzeug in einem Prüfstand hinsichtlich seiner Position und Orientierung zu vermessen. Die gemessene Abstrahlrichtung des Scheinwerfers (intrinsisches Koordinatensystem des Scheinwerfers) kann insoweit bewertet werden, ob die Abstrahlrichtung der Scheinwerfer bezogen auf das Koordinatensystem des Fahrzeugs richtig ist. Abweichungen können mittels Justierschraube(n) korrigiert werden, indem das Werkzeug nach der vorliegenden Erfindung in einem automatisierten Betrieb ansteuerbar ist derart, dass eventuelle Abweichungen ausgeglichen werden.

Eine genaue Positionierung der Drehmomentübertrager bezogen auf den Kopf der jeweiligen Justierschraube kann mittels einer Steuerung erfolgen, wenn die Position und Orientierung des Fahrzeugs im Prüfstand durch eine gezielte Positionierung mittels Stellmitteln oder durch entsprechende Messungen bekannt ist. Alternativ kann die Position und Orientierung des Fahrzeugs auch durch entsprechende Messsonden messtechnisch erfasst werden.

Aus der an sich bekannten Geometrie des Fahrzeugs ist es über die bekannte Position und Orientierung des Fahrzeugs möglich, die Position der Justierschrauben zu ermitteln. Die Drehmomentübertrager können dann mittels einer Steuerung an diese Position bewegt werden, so dass dann die Justierung der Scheinwerfer erfolgen kann.

Alternativ zur Positionierung der Drehmomentübertrager mittels einer Steuerung ist es auch möglich, diese mit einer Regelung zu positionieren. Hierzu kann beispielsweise an dem Ende des Roboterarms oder an der Tragplatte eine Kamera angebracht sein, mit der erfasst wird, ob sich der jeweilige Drehmomentübertrager in der richtigen Position und Orientierung auf den Kopf der Justierschraube zubewegt. Bei dieser Regelung können noch Korrekturen für die Positionierung des Drehmomentübertragers vorgenommen werden.

## Patentansprüche

1. Betätigungswerkzeug für eine Schraube,
➢ mit wenigstens einem Drehmomentübertrager (3; 6) für jeweils eine Schraube, wobei sich der Drehmomentübertrager (3; 6) entlang einer Längsachse erstreckt,
➢ mit wenigstens einem motorisch betriebenen Antriebsmittel (2; 5), das ausgestaltet ist zum Antrieb des wenigstens einen Drehmomentübertragers (3; 6) durch eine Übertragung des Drehmomentes der Abtriebswelle des wenigstens einen Antriebsmittels (2; 5) auf den wenigstens einen Drehmomentübertrager (3; 6),
➢ wobei das wenigstens eine Antriebsmittel (2; 5) seitlich neben dem wenigstens einen Drehmomentübertrager (3; 6) angeordnet ist derart, dass die Längsachse des wenigstens einen Drehmomentübertragers (3; 6) seitlich versetzt ist zur Abtriebswelle des wenigstens einen Antriebsmittels (2; 5),
➢ wobei das Betätigungswerkzeug weiterhin wenigstens eine Drehmomentübertragungseinheit (1; 4) aufweist, die ausgestaltet ist zur Übertragung des Drehmoments von der Abtriebswelle des wenigstens einen Antriebsmittels (2; 5) auf den wenigstens einen Drehmomentübertrager (3; 6) und
➢ wobei das Betätigungswerkzeug so ausgestaltet ist, dass bei einem fertig montierten Betätigungswerkzeug, das zumindest das wenigstens eine Antriebsmittel (2; 5) sowie wenigstens einen Drehmomentübertrager (3; 6) umfasst, der wenigstens eine Drehmomentübertrager (3; 6) derart gegenüber dem wenigstens einen Antriebsmittel (2; 5) gelagert ist, dass der wenigstens eine Drehmomentübertrager (3; 6) entlang seiner Längsachse gegenüber dem wenigstens einen Antriebsmittel (2; 5) verschiebbar ist,
**dadurch gekennzeichnet, dass** die verschiebbare Lagerung des wenigstens einen Drehmomentübertragers (3; 6) gegenüber dem wenigstens einen Antriebsmittel (2; 5) derart ausgestaltet ist, dass diese Lagerung eine Halteposition aufweist, aus der der wenigstens eine Drehmomentübertrager (3; 6) in seiner Längsrichtung nur dann verschiebbar ist, wenn auf den wenigstens einen Drehmomentübertrager (3; 6) eine Kraft in seiner Längsrichtung ausgeübt wird, die oberhalb eines ersten Schwellwertes der Kraft liegt, die beim formschlüssigen Ankoppeln des Drehmomentübertragers mit dem Kopf der Schraube auftritt.

2. Betätigungswerkzeug nach Anspruch 1,
**dadurch gekennzeichnet, dass** die verschiebbare Lagerung des wenigstens einen Drehmomentübertragers (3; 6) gegenüber dem wenigstens einen Antriebsmittel (2; 5) derart ausgestaltet ist, dass diese Lagerung eine Halteposition aufweist, aus der der wenigstens eine Drehmomentübertrager (3; 6) in seiner Längsrichtung nur dann verschiebbar ist, wenn auf den wenigstens einen Drehmomentübertrager (3; 6) eine Kraft in seiner Längsrichtung ausgeübt wird, die oberhalb eines zweiten Schwellwertes der Kraft liegt, die beim Abziehen des Drehmomentübertragers vom Kopf der Schraube üblicherweise maximal auftritt, wenn der Drehmomentübertrager und der Kopf der Schraube nicht verkantet sind.

3. Betätigungswerkzeug nach Anspruch 1 oder 2,
**dadurch gekennzeichnet, dass** die verschiebbare Lagerung federelastisch ausgestaltet ist derart, dass der wenigstens eine Drehmomentübertrager (3; 6) in seiner Längsrichtung gedrückt wird derart, dass diese Federkraft einen Druck in Richtung des Endes des wenigstens einen Drehmomentübertragers (3; 6) ausübt, über das die Schraube angetrieben wird.

4. Betätigungswerkzeug nach Anspruch 3,
**dadurch gekennzeichnet, dass** die verschiebbare Lagerung derart ausgestaltet ist, dass diese Lagerung eine obere Rastposition für den wenigstens einen Drehmomentübertrager (3; 6) aufweist, in der der wenigstens eine Drehmomentübertrager (3; 6) entgegen der Federkraft bis zu einer oberen Endposition gedrückt ist, wobei das Betätigungswerkzeug Rastmittel aufweist, die derart ausgestaltet sind, dass durch deren Aktivierung der wenigstens eine Drehmomentübertrager (3; 6) in dieser oberen Rastposition form- und / oder kraftschlüssig gehalten wird.

5. Betätigungswerkzeug nach einem der Ansprüche 1 bis 4,
**dadurch gekennzeichnet, dass** die wenigstens eine Drehmomentübertragungseinheit (1; 4) eine Lagerung für den wenigstens einen Drehmomentübertrager (3; 6) aufweist, die derart ausgestaltet ist, dass die Lagerung den wenigstens einen Drehmomentübertrager (3; 6) form- und/oder kraftschlüssig umgreift zur Übertragung eines Drehmomentes von der Lagerung auf den wenigstens einen Drehmomentübertrager (3; 6) und dass die Lagerung über die Abtriebswelle des wenigstens einen Antriebsmittels (2; 5) antreibbar ist.

6. Betätigungswerkzeug nach einem der Ansprüche 1 bis 4,
**dadurch gekennzeichnet, dass** der wenigstens eine Drehmomentübertrager (3; 6) jeweils ein Lagerelement aufweist, in dem der wenigstens eine Drehmomentübertrager (3; 6) derart gelagert ist, dass dieser bei feststehendem Lagerelement um seine Längsachse rotierbar ist, wobei der wenigstens eine Drehmomentübertrager (3; 6) auf seiner Außenumfangsfläche eine zahnradförmige Profilierung aufweist, über die der wenigstens eine Drehmomentübertrager (3; 6) mittels der Abtriebswelle des wenigstens einen Antriebsmittels (2; 5) mittelbar oder unmittelbar antreibbar ist.

7. Betätigungswerkzeug nach einem der vorhergehenden Ansprüche,
**dadurch gekennzeichnet, dass** das Betätigungswerkzeug eine Antriebseinheit aufweist, die derart gestaltet ist, dass über diese Antriebseinheit der wenigstens eine Drehmomentübertrager (3; 6) in einer Taumelbewegung derart bewegbar ist, dass die Längsachse des wenigstens einen Drehmomentübertragers (3; 6) in der Form einer Kegelfläche rotiert, wobei die Spitze des Kegels durch das Ende des wenigstens einen Drehmomentübertragers (3; 6) gebildet wird, über das die Schraube angetrieben wird.

8. Betätigungswerkzeug nach einem der vorhergehenden Ansprüche,
**dadurch gekennzeichnet, dass** das Betätigungswerkzeug eine Tragplatte (7) aufweist, wobei zwei Drehmomentübertrager (3; 6) auf derselben Tragplatte (7) derart angebracht sind, dass die Position und / oder die Orientierung der beiden Drehmomentübertrager (3; 6) relativ zueinander einstellbar ist (8).

9. Betätigungswerkzeug nach einem der vorhergehenden Ansprüche,
**dadurch gekennzeichnet, dass** der wenigstens eine Drehmomentübertrager (3; 6) oder die Tragplatte (7) Befestigungsmittel aufweisen zur Befestigung am Ende eines Roboterarms (201).

10. Betätigungswerkzeug nach Anspruch 9,
**dadurch gekennzeichnet, dass** der Roboterarm (201) nach den Kriterien der "Mensch-Roboter-Kollaboration" oder der "Mensch-Roboter-Kooperation" (MRK) ausgelegt ist.

11. Verwendung des Betätigungswerkzeugs nach einem der Ansprüche 1 bis 10 zur Justierung von wenigstens einem Aggregat eines Fahrzeugs, wobei das wenigstens eine Aggregat des Fahrzeugs wenigstens eine Justierschraube aufweist, wobei das Aggregat so ausgestaltet ist, dass durch die Drehung der wenigstens einen Justierschraube das intrinsische Koordinatensystem des Aggregats bezogen auf das Koordinatensystem des Fahrzeugs verändert wird, wobei bei der Verwendung folgender Verfahrensablauf des Vorgangs der Justierung des wenigstens einen Aggregates des Fahrzeugs realisiert ist:
➢ Positionierung des Betätigungswerkzeugs mit der federelastischen Lagerung des Drehmomentübertragers gemäß Anspruch 3 und bei deaktivierten Klemmkräften gemäß den Ansprüchen 1 und / oder 2,
➢ Kopplung des Drehmomentübertragers mit dem Kopf der Justierschraube in einer Halteposition des Drehmomentübertragers mit einer Klemmkraft für den Drehmomentübertrager gegenüber einer Verschiebung in seiner Längsrichtung gemäß Anspruch 1, die in diesem Verfahrensschritt so begrenzt ist, dass der Drehmomentübertrager dann aus der Halteposition gedrückt wird, wenn die Kraft einer Kraft entspricht, die oberhalb der Kraft liegt, die beim formschlüssigen Ankoppeln des Drehmomentübertragers mit dem Kopf der Schraube üblicherweise auftritt,
➢ Durchführung der Justierungsarbeiten,
➢ Abkopplung des Drehmomentübertragers vom Kopf der Justierschraube mit einer Klemmkraft für den Drehmomentübertrager in dieser Halteposition gegenüber einer Verschiebung in seiner Längsrichtung gemäß Anspruch 2, die in diesem Verfahrensschritt so begrenzt ist, dass der Drehmomentübertrager dann aus der Halteposition gedrückt wird, wenn die Kraft einer Kraft entspricht, die oberhalb der Kraft liegt, die beim Abziehen des Drehmomentübertragers vom Kopf der Schraube üblicherweise maximal auftritt, wenn der Drehmomentübertrager und der Kopf der Schraube nicht verkantet sind.

## Claims

1. actuating tool for a screw,
➢ with at least one torque transmitter (3; 6) for one screw in each case, the torque transmitter (3; 6) extending along a longitudinal axis,
➢ having at least one motor-driven drive means (2; 5), which is designed to drive the at least one torque transmitter (3; 6) by transmitting the torque of the output shaft of the at least one drive means (2; 5) to the at least one torque transmitter (3; 6),
➢ wherein the at least one drive means (2; 5) is arranged laterally adjacent to the at least one torque transmitter (3; 6) such that the longitudinal axis of the at least one torque transmitter (3; 6) is laterally offset with respect to the output shaft of the at least one drive means (2; 5),
➢ wherein the actuation tool further comprises at least one torque transmission unit (1; 4) configured to transmit the torque from the output shaft of the at least one drive means (2; 5) to the at least one torque transmitter (3; 6), and
➢ the actuating tool being designed in such a way that, in the case of a fully assembled actuating tool which comprises at least the at least one drive means (2; 5) and at least one torque transmitter (3; 6), the at least one torque transmitter (3; 6) is mounted with respect to the at least one drive means (2; 5) in such a way that the at least one torque transmitter (3; 6) can be displaced along its longitudinal axis with respect to the at least one drive means (2; 5),
**characterized in that** the displaceable mounting of the at least one torque transmitter (3; 6) relative to the at least one drive means (2; 5) is designed in such a way that this mounting has a holding position from which the at least one torque transmitter (3; 6) can be displaced in its longitudinal direction only if a force is exerted on the at least one torque transmitter (3; 6) in its longitudinal direction which is above a first threshold value of the force which occurs during positive coupling of the torque transmitter to the head of the screw.

2. actuating tool according to claim 1,
**characterized in that** the displaceable mounting of the at least one torque transmitter (3; 6) relative to the at least one drive means (2; 5) is designed in such a way that this mounting has a holding position from which the at least one torque transmitter (3; 6) can be displaced in its longitudinal direction only if a force in its longitudinal direction acts on the at least one torque transmitter (3; 6) is subjected to a force in its longitudinal direction that is above a second threshold value of the maximum force that normally occurs when the torque transmitter is pulled off the head of the screw, if the torque transmitter and the head of the screw are not tilted.

3. actuating tool according to claim 1 or 2,
**characterized in that** the mounting is spring-elastic in such a way that the at least one torque transmitter (3; 6) is pressed in its longitudinal direction in such a way that this spring force exerts a pressure in the direction of the end of the at least one torque transmitter (3; 6) via which the screw is driven.

4. actuating tool according to claim 3,
**characterized in that** the mounting is designed in such a way that this mounting has an upper latching position for the at least one torque transmitter (3; 6), in which the at least one torque transmitter (3; 6) is pressed against the spring force to an upper end position, the actuating tool having latching means which are designed in such a way that, as a result of their activation, the at least one torque transmitter (3; 6) is held in this upper latching position in a form-fitting and/or force-fitting manner.

5. actuating tool according to one of claims 1 to 4,
**characterized in that** the at least one torque transmission unit (1; 4) has a mounting arrangement for the at least one torque transmitter (3; 6), which mounting arrangement is configured in such a way that the mounting arrangement engages around the at least one torque transmitter (3; 6) in a form-fitting and/or force-fitting manner in order to transmit a torque from the mounting arrangement to the at least one torque transmitter (3; 6), and **in that** the mounting arrangement can be driven via the output shaft of the at least one drive means (2; 5).

6. actuating tool according to one of claims 1 to 4,
**characterized in that** the at least one torque transmitter (3; 6) in each case has a mounting element in which the at least one torque transmitter (3; 6) is mounted in such a way that it can be rotated about its longitudinal axis when the mounting element is stationary, the at least one torque transmitter (3; 6) having, on its outer circumferential surface, a gearwheel-shaped profiling via which the at least one torque transmitter (3; 6) can be driven directly or indirectly by means of the output shaft of the at least one drive means (2; 5).

7. actuating tool according to one of the preceding claims,
**characterized in that** the actuating tool has a drive unit which is designed in such a way that, via this drive unit, the at least one torque transmitter (3; 6) can be moved in a wobbling movement in such a way that the longitudinal axis of the at least one torque transmitter (3; 6) rotates in the form of a conical surface, the apex of the cone being formed by the end of the at least one torque transmitter (3; 6) via which the screw is driven.

8. actuating tool according to any one of the preceding claims,
**characterized in that** the actuating tool comprises a support plate (7), wherein two torque transmitters (3; 6) are mounted on the same support plate (7) in such a way that the position and/or the orientation of the two torque transmitters (3; 6) is adjustable relative to each other (8).

9. actuating tool according to one of the preceding claims,
**characterized in that** the at least one torque transmitter (3; 6) or the support plate (7) have fastening means for fastening to the end of a robot arm (201).

10. actuating tool according to claim 9,
**characterized in that** the robot arm (201) is designed according to the criteria of "human-robot collaboration" or "human-robot cooperation" (HRC).

11. use of the actuation tool according to one of claims 1 to 10 for the adjustment of at least one aggregate of a vehicle, wherein the at least one aggregate of the vehicle has at least one adjustment screw, wherein the aggregate is designed in such a way that the intrinsic coordinate system of the aggregate is changed with respect to the coordinate system of the vehicle by the rotation of the at least one adjustment screw, wherein, in use, the following process sequence of the operation of adjusting the at least one aggregate of the vehicle is realized:
➢ positioning of the actuating tool with the spring-elastic mounting of the torque transmitter according to claim 3 and with deactivated clamping forces according to claims 1 and / or 2,
➢ coupling the torque transmitter with the head of the adjustment screw in a holding position of the torque transmitter with a clamping force for the torque transmitter against a displacement in its longitudinal direction according to claim 1, which is limited in this process step such that the torque transmitter is then pressed out of the holding position when the force corresponds to a force which is above the force which normally occurs during the positive coupling of the torque transmitter with the head of the screw,
➢ performing the adjustment work,
➢ uncoupling the torque transmitter from the head of the adjustment screw with a clamping force for the torque transmitter in this holding position against a displacement in its longitudinal direction according to claim 2, which is limited in this process step so that the torque transmitter is then pressed out of the holding position when the force corresponds to a force which is above the maximum force which normally occurs when the torque transmitter is pulled away from the head of the screw when the torque transmitter and the head of the screw are not tilted.

## Revendications

1. Outil d'actionnement pour une vis,
• avec au moins un transmetteur de couple (3 ; 6) pour une vis respective, le transmetteur de couple (3 ; 6) s'étendant le long d'un axe longitudinal,
• avec au moins un moyen d'entraînement (2 ; 5) actionné par moteur, qui est conçu pour entraîner ledit au moins un transmetteur de couple (3 ; 6) par une transmission du couple de l'arbre de sortie dudit au moins un moyen d'entraînement (2 ; 5) audit au moins un transmetteur de couple (3 ; 6),
• ledit au moins un moyen d'entraînement (2 ; 5) étant disposé latéralement à côté dudit au moins un transmetteur de couple (3 ; 6) de telle sorte que l'axe longitudinal dudit au moins un transmetteur de couple (3 ; 6) est décalé latéralement par rapport à l'arbre de sortie dudit au moins un moyen d'entraînement (2 ; 5),
• l'outil d'actionnement présentant en outre au moins une unité de transmission de couple (1 ; 4) qui est conçue pour transmettre le couple de l'arbre de sortie dudit au moins un moyen d'entraînement (2 ; 5) audit au moins un transmetteur de couple (3 ; 6) et
• l'outil d'actionnement étant conçu de telle sorte que, lorsque l'outil d'actionnement est entièrement monté, il comprend au moins ledit au moins un moyen d'entraînement (2 ; 5) ainsi qu'au moins un transmetteur de couple (3 ; 6), ledit au moins un transmetteur de couple (3 ; 6) étant logé par rapport audit au moins un moyen d'entraînement (2 ; 5) de telle sorte que ledit au moins un transmetteur de couple (3 ; 6) peut être déplacé le long de son axe longitudinal par rapport audit au moins un moyen d'entraînement (2 ; 5),
**caractérisé en ce que** le logement mobile dudit au moins un transmetteur de couple (3 ; 6) par rapport audit au moins un moyen d'entraînement (2 ; 5) est réalisé de telle sorte que ce logement présente une position de maintien à partir de laquelle ledit au moins un transmetteur de couple (3 ; 6) ne peut être déplacé dans sa direction longitudinale que lorsqu'une force est exercée sur ledit au moins un transmetteur de couple (3 ; 6) dans sa direction longitudinale, laquelle force se situe au-dessus d'une première valeur seuil de la force qui se produit lors de l'accouplement par complémentarité de forme du transmetteur de couple avec la tête de la vis.

2. Outil d'actionnement selon la revendication 1, **caractérisé en ce que** le logement mobile dudit au moins un transmetteur de couple (3 ; 6) par rapport audit au moins un moyen d'entraînement (2 ; 5) est conçu de telle sorte que ce logement présente une position de maintien à partir de laquelle ledit au moins un transmetteur de couple (3 ; 6) ne peut être déplacé dans sa direction longitudinale que lorsqu'une force est exercée sur ledit au moins un transmetteur de couple (3 ; 6) dans sa direction longitudinale, laquelle force est supérieure à une deuxième valeur seuil de la force maximale qui se produit habituellement lors du retrait du transmetteur de couple de la tête de la vis, lorsque le transmetteur de couple et la tête de la vis ne sont pas coincés.

3. Outil d'actionnement selon la revendication 1 ou 2, **caractérisé en ce que** le logement mobile est conçu de manière élastique de telle sorte que ledit au moins un transmetteur de couple (3 ; 6) est pressé dans sa direction longitudinale de telle sorte que cette force élastique exerce une pression en direction de l'extrémité dudit au moins un transmetteur de couple (3 ; 6) par laquelle la vis est entraînée.

4. Outil d'actionnement selon la revendication 3, **caractérisé en ce que** le logement mobile est conçu de telle sorte que ce logement présente une position d'encliquetage supérieure pour ledit au moins un transmetteur de couple (3 ; 6), dans laquelle ledit au moins un transmetteur de couple (3 ; 6) est pressé à l'encontre de la force élastique jusqu'à une position finale supérieure, l'outil d'actionnement présentant des moyens d'encliquetage qui sont conçus de telle sorte que, par leur activation, ledit au moins un transmetteur de couple (3 ; 6) est maintenu par complémentarité de forme et/ou par friction dans cette position d'encliquetage supérieure.

5. Outil d'actionnement selon l'une des revendications 1 à 4, **caractérisé en ce que** ladite au moins une unité de transmission de couple (1 ; 4) présente un logement pour ledit au moins un transmetteur de couple (3 ; 6), qui est conçu de telle sorte que le logement saisit en l'entourant par complémentarité de forme et/ou par friction ledit au moins un transmetteur de couple (3 ; 6) pour transmettre un couple du logement audit au moins un transmetteur de couple (3 ; 6), et **en ce que** le logement peut être entraîné par l'intermédiaire de l'arbre de sortie dudit au moins un moyen d'entraînement (2 ; 5).

6. Outil d'actionnement selon l'une des revendications 1 à 4, **caractérisé en ce que** ledit au moins un transmetteur de couple (3 ; 6) présente un élément de logement respectif dans lequel est logé ledit au moins un transmetteur de couple (3 ; 6) de telle sorte que celui-ci peut tourner autour de son axe longitudinal lorsque l'élément de logement est fixe, ledit au moins un transmetteur de couple (3 ; 6) présentant sur sa surface périphérique extérieure un profilage en forme de roue dentée, par lequel ledit au moins un transmetteur de couple (3 ; 6) peut être entraîné directement ou indirectement au moyen de l'arbre de sortie dudit au moins un moyen d'entraînement (2 ; 5).

7. Outil d'actionnement selon l'une des revendications précédentes, **caractérisé en ce que** l'outil d'actionnement est muni d'une unité d'entraînement qui est conçue de telle sorte que, par l'intermédiaire de cette unité d'entraînement, ledit au moins un transmetteur de couple (3 ; 6) peut être déplacé dans un mouvement de nutation de telle sorte que l'axe longitudinal dudit au moins un transmetteur de couple (3 ; 6) tourne sous la forme d'une surface conique, la pointe du cône étant formée par l'extrémité dudit au moins un transmetteur de couple (3 ; 6) par l'intermédiaire de laquelle la vis est entraînée.

8. Outil d'actionnement selon l'une des revendications précédentes, **caractérisé en ce que** l'outil d'actionnement est muni d'une plaque support (7), deux transmetteurs de couple (3 ; 6) étant montés sur la même plaque support (7) de telle sorte que la position et/ou l'orientation des deux transmetteurs de couple (3 ; 6) l'un par rapport à l'autre peut être réglée (8).

9. Outil d'actionnement selon l'une des revendications précédentes, **caractérisé en ce que** ledit au moins un transmetteur de couple (3 ; 6) ou la plaque support (7) sont munis de moyens de fixation pour leur fixation à l'extrémité d'un bras de robot (201).

10. Outil d'actionnement selon la revendication 9, **caractérisé en ce que** le bras robotique (201) est conçu selon les critères de la "collaboration homme-robot" ou de la "coopération homme-robot" (MRK).

11. Utilisation de l'outil d'actionnement selon l'une des revendications 1 à 10 pour ajuster au moins un agrégat d'un véhicule, ledit au moins un agrégat de véhicule présentant au moins une vis d'ajustage, l'agrégat étant conçu de telle sorte que la rotation de ladite au moins une vis d'ajustage modifie le système de coordonnées intrinsèque de l'agrégat par rapport au système de coordonnées du véhicule, le déroulement suivant du processus d'ajustage dudit au moins un agrégat de véhicule étant réalisé lors de l'utilisation :
• le positionnement de l'outil d'actionnement avec le logement élastique du transmetteur de couple selon la revendication 3 et avec des forces de serrage selon les revendications 1 et/ou 2 désactivées,
• le couplage du transmetteur de couple avec la tête de la vis d'ajustage dans une position de maintien du transmetteur de couple avec une force de serrage pour le transmetteur de couple par rapport à un déplacement dans sa direction longitudinale selon la revendication 1, qui est limitée dans cette étape du procédé de telle sorte que le transmetteur de couple est alors repoussé hors de la position de maintien lorsque la force correspond à une force qui est supérieure à la force qui se produit habituellement lors de l'accouplement par complémentarité de forme du transmetteur de couple avec la tête de la vis,
• réalisation des travaux d'ajustement,
• désaccouplement du transmetteur de couple de la tête de la vis d'ajustement avec une force de serrage pour le transmetteur de couple dans cette position de maintien par rapport à un déplacement dans sa direction longitudinale selon la revendication 2, qui est limitée dans cette étape du procédé de telle sorte que le transmetteur de couple est alors poussé hors de la position de maintien lorsque la force correspond à une force qui est supérieure à la force maximale qui se produit habituellement lors du retrait du transmetteur de couple de la tête de la vis, lorsque le transmetteur de couple et la tête de la vis ne sont pas coincés.
